# EUROPEAN PATENT SPECIFICATION

(11) **EP 3 165 794 B1**
(45) Date of publication and mention of the grant of the patent: **06.11.2019**
(21) Application number: 15779459.5
(22) Date of filing: 10.04.2015
(51) Int. Cl.: F16H 31/00, F03B 13/22, F16H 3/00, F03B 13/14

(54) **DEVICE, TRANSMISSION, AND UNIVERSAL MECHANICAL COUPLING OF FORCES HAVING DIFFERENT MAGNITUDES AND DIRECTION (D.T.U.M.C.)**
VORRICHTUNG, ÜBERTRAGUNG UND UNIVERSELLE MECHANISCHE KUPPLUNG VON KRÄFTEN MIT VERSCHIEDENEN GRÖSSEN UND RICHTUNGEN
DISPOSITIF DE TRANSMISSION ET D'ACCOUPLEMENT MÉCANIQUE UNIVERSEL À FORCES D'AMPLITUDES ET SENS DIFFÉRENTS (DTAMU)

(30) Priority: 14.04.2014 ES 201400353
(43) Date of publication of application: 10.05.2017
(73) Proprietor: Rodriguez Ramirez, Marco Antonio, 35001 Las Palmas de Gran Canaria (ES)
(72) Inventor: Rodriguez Ramirez, Marco Antonio, 35001 Las Palmas de Gran Canaria (ES)
(86) International application number: PCT/ES2015/070284
(87) International publication number: WO 2015/158946

(56) References cited:
- EP-A1- 2 353 987
- WO-A2-2011/131188
- WO-A2-2014/028782
- DE-A1- 3 546 276
- GB-A- 519 155
- GB-A- 2 469 064
- JP-A- S62 101 946
- US-A- 4 145 885
- US-A- 4 311 435
- US-A1- 2009 066 085

## Description

### OBJECT OF THE INVENTION

The object of the present invention is to couple rotational forces of different magnitudes and directions on a same rotational axis, and to obtain a unidirectional motion in an output shaft.

### FIELD OF THE INVENTION

The main field of application of this patent is the electrical industry, but it is tightly related to the mechanical industry. It has to be considered that the uses thereof are several. For example, it can be used as a converter of linear motion into rotational motion.

### BACKGROUND

There are several patent applications, several invention patents and several patents of utility models that use systems that convert bidirectional movements in a unidirectional movement, using shafts, gears, chain sprockets with transmission chain or turning inverting gears, and mechanisms of unidirectional turn. For example, for the conversion of movements in different directions in which wave energy can circulate.

Among them are:
patents of invention having two axes, as for example, patent DE3546276, comprising two shafts, in which the turning movement is applied, using as input a rack gear, in addition, one of the shafts, is in turn the output shaft, the way to move the shaft, is using a rack gear that acts on two gearwheels, each placed on each shaft, in addition, said gears, have a unidirectional turning mechanism each, the patent wo2014028782, also has two shafts, one of the shaft, is the output shaft, on the other of the shafts, there is a synchronous pulley, the force is transmitted to this synchronous pulley, using a transmission belt, while always keeping an optimum vector angle of ninety degrees, in the shaft that is the synchronous pulley, there are two mechanisms of unidirectional rotation, each placed in a medium of transmission from that shaft, to the output shaft. In these patents, a turbine cannot be coupled in series to the input shaft, because they do not have a single input shaft.

There are patents that have three shafts or more shafts, and also, a greater number of gears, as for example, patent EP 2353987, Jorge Victorino Pastrana Molleda, this patent, refers to an optimized system to transform the linear movement generated by two rack elements, comprising three shafts, one of the shaft is the input shaft, and has an annular wheel on which the force or reciprocating return and return movement is applied, it also has a second shaft, which transmits the movement to a third shaft, which is the output shaft. In the second and third shaft, there is a unidirectional turning mechanism in each one, and arranged so that they lock in the same direction of rotation. In this patent, it is not possible to couple a turbine in series to the input shaft.

The patent JPS62101946, Konishiroku Photo Ind, deals with a unidirectional transmission device, which comprises three shafts, one of the shaft, is the input shaft, has another output shaft and an auxiliary shaft with two gears, it also has two mechanisms of unidirectional rotation, placed, one on the input shaft, and another, on the auxiliary shaft. The transmission of movement to the output shaft is made from the input shaft and from the auxiliary shaft. Patent GB 2469064 (A), Hardy William is a unidirectional drive assembly, comprising four shafts, one of the shaft is the input shaft, two of the shaft are drivers, and an output shaft coaxial to the shaft of entry. It has two unidirectional rotation mechanisms placed between coaxial shafts arranged to block in different direction of rotation. The patent GB 2469064 (A) like the patent JPS62101946, have an input shaft and an output shaft, in both cases, although the minimum number of gears to move the output shaft with respect to the input shaft, when this It rotates in one direction, it is of two gears, when the input shaft rotates in the opposite direction, to the one described above, the minimum number of gears to move the output shaft is four gears. In these patents, both the input shaft and the output shaft do not have two ends in which to couple in series, for example, a turbine.

The system object of this invention uses four mechanisms of unidirectional rotation, so that, avoids unnecessary friction between the gear wheels, and improving the performance and preventing unnecessary movements or displacements.

### DESCRIPTION

The present invention discloses a transmission system according to appended claim 1.

### BRIEF DESCRIPTION OF THE DRAWINGS

In order to provide a better understanding of the present utility model and the operation thereof, a figure is provided which shows in a basic and general manner, an example of configuring the object, although said example does not present any limitation at all with regarding the configuration of the object in a different way to the one shown here, this figure is not to scale, for a better identification of the components that integrate them.

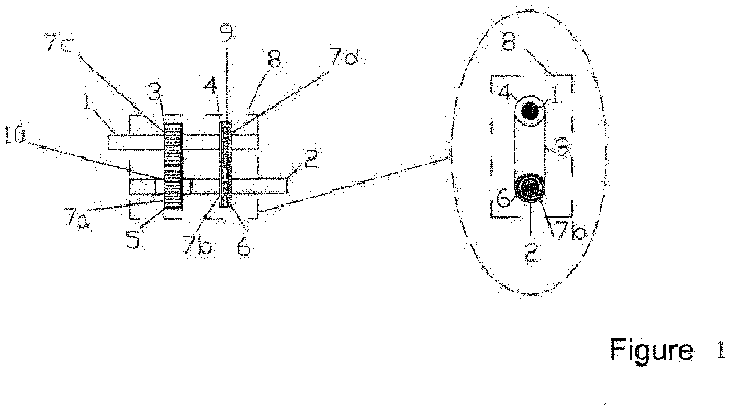

**FIG. 1** show a perspective view of configuration of the object.

### DESCRIPTION OF AN EMBODIMENT (FIG. 1)

This embodiment shows the basic minimum way of forming the object. This consists of configuring this coupling unit by means of a mixed linkage between two shafts (1, 2), without using rotation inverters.
Transmission means (3 and 5) and (4, 9 and 6) are placed starting from an input shaft (1) up to the output shaft (2).

For further detail of this embodiment, in an input shaft (1) two elements are placed being suitable for transmitting the motion taking place in said shaft (1), in this case, a gear (3), and also, at a minimum required distance, a pinion gear (4) is situated therein.

A cogged wheel (5) and a pinion gear (6) are placed at an output shaft (2), to which a rotation or unidirectional driving mechanism is coupled, in this case, consisting of two free wheel (7a and 7b) mechanisms. These unidirectional rotations or driving mechanisms (7a and 7b) are placed such that both apply a force on the shaft they are on, in the same direction in which the output shaft is intended to be rotated.

Briefly, we can say that a unidirectional coupling device, as that being referred to, is a device which is locked when a force is applied in one direction, and which is not locked, freely rotating, when a force is applied in a direction opposite to the previous one.

For this embodiment the motion transmission between cogged wheel (3) and cogged wheel (5) is a direct one, and for pinion gear (4) and pinion gear (6) this is done by means of a chain (9), although this can be a driving chain, depending on the transmission means.

Operation is as follows: when on the input shaft (1) a rotational force is applied in one direction, the cogged wheel (3) transmits the movement to the other cogged wheel (5) causing the output shaft (2) to rotate in a direction opposite to the that of the input shaft (1).

For example, if the input shaft (1) rotates towards the right the output shaft (2) will rotate towards the left.

When the input shaft (1) is rotated towards the left, this will move the cogged wheel or pinion gear (4), transmitting the movement through the chain (9) up to the pinion gear (6) thus moving the output shaft (2) also towards the left.

In another embodiment, other two unidirectional rotation mechanisms, located, one (7*c*) in the cogged wheel (3), so that the internal ring of the free wheel locks in the same direction as the internal rings from the unidirectional rotation mechanisms (7a and 7b), and another (7*d*) located at the pinion (4), such that the internal ring locks in the different direction as the internal rings from the unidirectional rotation mechanisms (7a and 7b), avoiding unnecessary friction between the cogged wheels (3 and 5), improving yield and avoiding movements or displacements which are also unnecessary.

In order to obtain a better fixing of the unidirectional rotation mechanisms, located in the transmission elements, to the shafts, and so as to be able to move these along said shafts, a third element having a tubular shape (10) can be used which will be fixed between the shaft and the internal ring of the free wheel mechanisms; with grooved means, key slots, stud bolts, etc.

The transmission means used to move the output shaft unidirectionally can act as speed multipliers. Adapting the sizes of the gear wheels, using crowns and so on.

A driven sprocket can be placed on the input shaft to transmit the movement to the output shaft.

## Claims

1. Transmission system for converting bidirectional movements in movements in a single direction comprising two shafts, one input shaft (1), wherein force is applied, and another output shaft (2), transmitting motion, comprising two transmission means so as to move a shaft with respect to the other, and wherein one of the transmission means being used consists of two gears (3, 5) of cogged wheels, which invert the rotation direction between the two shafts (1, 2), while the other transmission means used also consists of two pinion gears (4, 6) having a driving chain (9), so as to move the two shafts (1, 2) in the same direction, having four unidirectional coupling devices (7a,7b,7c,7d) located between the gears and the shafts, such that the cogged wheel transmission means, reversing the rotation direction between the two shafts, has two unidirectional coupling devices, (7c, 7a), one in each shaft, and arranged so as to lock in the same rotation direction, whereas the pinion chain transmission means moving both shafts in the same rotation direction, has two unidirectional coupling devices (7 d, 7b), one in each shaft, arranged so as to lock in opposite rotation directions, wherein the unidirectional coupling devices (7a, 7b) which are in the output shaft, lock in the same rotation direction one with respect to the other.

## Patentansprüche

1. Übertragungssystem zum Umwandeln von bidirektionalen Bewegungen in Bewegungen in einer einzigen Richtung, umfassend zwei Wellen, eine Eingangswelle (1), wobei eine Kraft angewendet wird, und eine andere Ausgangswelle (2), die Bewegung überträgt, umfassend zwei Übertragungsmittel, um a zu bewegen Welle in Bezug auf die andere, und wobei eines der verwendeten Übertragungsmittel aus zwei Zahnrädern (3, 5) von Zahnrädern besteht, die die Drehrichtung zwischen den beiden Wellen (1, 2) umkehren, während das andere Übertragungsmittel verwendet wird besteht ebenfalls aus zwei Ritzeln (4, 6) mit einer Antriebskette (9), um die beiden Wellen (1, 2) in die gleiche Richtung zu bewegen, mit vier unidirektionalen Kupplungsvorrichtungen (7a, 7b, 7c, 7d) zwischen den Zahnrädern und den Wellen angeordnet, so dass die Zahnradübertragungseinrichtung, die die Drehrichtung zwischen den beiden Wellen umkehrt, zwei unidirektionale Kupplungseinrichtungen (7c, 7a) aufweist, eine in jeder Welle und so angeordnet ist, dass sie in der Welle einrastet gleiche Drehrichtung, wohingegen die Ritzelkette transm Ausgabemittel, die beide Wellen in die gleiche Drehrichtung bewegen, weisen zwei unidirektionale Kupplungsvorrichtungen (7d, 7b) auf, eine in jeder Welle, die so angeordnet ist, dass sie in entgegengesetzten Drehrichtungen arretieren, wobei die unidirektionalen Kupplungsvorrichtungen (7a, 7b) welche in der Abtriebswelle sind, in der gleichen Drehrichtung zueinander verriegeln.

## Revendications

1. Système de transmission permettant de convertir des mouvements bidirectionnels en mouvements dans une seule direction, comprenant deux arbres, un arbre d'entrée (1), dans lequel une force est appliquée, et un autre arbre de sortie (2), transmettant le mouvement, comprenant deux moyens de transmission arbre par rapport à l'autre, et dans lequel l'un des moyens de transmission utilisé est constitué de deux engrenages (3, 5) à roues dentées qui inversent le sens de rotation entre les deux arbres (1, 2), tandis que l'autre moyen de transmission utilisé se compose également de deux engrenages à pignon (4, 6) comportant une chaîne d'entraînement (9), de manière à déplacer les deux arbres (1, 2) dans le même sens, comportant quatre dispositifs de couplage unidirectionnels (7a, 7b, 7c, 7d) situé entre les engrenages et les arbres, de sorte que le moyen de transmission à roue dentée, inversant le sens de rotation entre les deux arbres, présente deux dispositifs de couplage unidirectionnels (7c, 7a), un dans chaque arbre, et agencés de manière à bloquer les même sens de rotation, alors que la transmission à chaîne du pignon ission signifie déplacer les deux arbres dans le même sens de rotation, comporte deux dispositifs de couplage unidirectionnels (7d, 7b), un dans chaque arbre, agencés de manière à se verrouiller dans des sens de rotation opposés, les dispositifs de couplage unidirectionnels (7a, 7b) sont dans l'arbre de sortie, bloquent dans le même sens de rotation l'une par rapport à l'autre.
